(19) Europäisches Patentamt
European Patent Office
Office européen des brevets

(11) **EP 2 195 825 B1**

(12) **EUROPÄISCHE PATENTSCHRIFT**

(45) Veröffentlichungstag und Bekanntmachung des Hinweises auf die Patenterteilung:
**26.10.2011 Patentblatt 2011/43**

(21) Anmeldenummer: **08787327.9**

(22) Anmeldetag: **19.08.2008**

(51) Int Cl.:
*H01J 61/33* (2006.01)        *H01J 61/82* (2006.01)
*H05B 41/24* (2006.01)

(86) Internationale Anmeldenummer:
**PCT/EP2008/060846**

(87) Internationale Veröffentlichungsnummer:
**WO 2009/040192 (02.04.2009 Gazette 2009/14)**

(54) **HOCHDRUCKENTLADUNGSLAMPE, SOWIE ZUGEHÖRIGES BETRIEBSVERFAHREN UND SYSTEM ZU DEREN RESONANZBETRIEB IM LONGITUDINALEN MODE**

HIGH-PRESSURE LAMP, AND ASSOCIATED OPERATING METHOD AND SYSTEM FOR OPERATING THE LAMP IN A LONGITUDINAL RESONANCE MODE

LAMPE À DÉCHARGE HAUTE PRESSION, AINSI QUE PROCÉDÉ ET SYSTÈME ASSOCIÉS DE FONCTIONNEMENT DE LA LAMPE PAR RÉSONANCE EN MODE LONGITUDINAL

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.09.2007 DE 102007045071**

(43) Veröffentlichungstag der Anmeldung:
**16.06.2010 Patentblatt 2010/24**

(73) Patentinhaber: **Osram AG**
**81543 München (DE)**

(72) Erfinder:
• **BRAUN, Paul**
**86405 Meitingen (DE)**
• **CLARK, Jens**
**85560 Ebersberg (DE)**
• **HÜTTINGER, Roland**
**86916 Kaufering (DE)**
• **MÜLLER, Patrick**
**85757 Karlsfeld (DE)**
• **STOCKWALD, Klaus**
**82110 Germering (DE)**

(56) Entgegenhaltungen:
**EP-A- 1 193 734          EP-A- 1 729 324**
**DE-A1-102004 004 828     US-A1- 2002 079 841**

EP 2 195 825 B1

**Beschreibung**

**Technisches Gebiet**

Die Erfindung betrifft eine Hochdruck entladungs lampe gemäß dem Oberbegriff des Anspruchs 1 und zugehöriges Betriebsverfahren und System zu deren Resonanzbetrieb im longitudinalen Mode. Es handelt sich dabei um Hochdruckentladungslampen mit keramischem Entladungsgefäß mit einem Aspektverhältnis von mindestens 2,5.

**Stand der Technik**

Aus der US 6 400 100 B ist bereits eine Hochdrucklampe und zugehöriges Betriebsverfahren für den Resonanzbetrieb von Hochdrucklampen im longitudinalen Mode und zugehöriges System bekannt. Dort wird ein Verfahren zum Auffinden der zweiten longitudinalen akustischen Resonanzfrequenz angegeben. Sie geht davon aus, dass beim kontinuierlichen Abfahren der den longitudinalen Modus anregenden Frequenz durch ein Auftreten einer relativen Brennspannungserhöhung der Lampe die Resonanzfrequenz in vertikaler Brennlage gefunden werden kann. Es zeigt sich, dass mit dieser Methode die longitudinale Frequenz für einen segregierten Bogenzustand in vertikaler Resonanz gefunden und dann beibehalten wird. Diese so gefundene Frequenz kann aber je nach Füllungszusammensetzung der Metallhalogenidfüllung und Zeitpunkt des Ablaufes der Suchprozedur deutlich zu hoch angesiedelt sein, so dass ein Anregen der akustischen Resonanz bei der mit o.g. Methode gefundenen Frequenz eine unzureichende Durchmischung ergibt und die Segregation nicht genügend gut aufhebt. Die Implementierung in ein elektronisches Vorschaltgerät ist außerdem aufwendig. Weitere Schriften, die sich mit der Reduzierung der Segregation durch gezielte Anregung der zweiten longitudinalen Mode beschäftigen sind beispielsweise US 2003/117075, US 2003/117085, US 2005/067975 und US 2004/095076. In all diesen Schriften wird ein keramisches Entladungsgefäß mit hohem Aspektverhältnis von mindestens 1,5 verwendet, das zylindrisch ist. Die Enden sind gerade oder halbkugelig.

Aus der EP-A 1 729 324 ist ein keramisches Entladungsgefäß bekannt, das schräge Endstücke aufweist. Es wird im Resonanzbetrieb betrieben. Diese Gefäßform ist speziell für den Betrieb mit akustischer Resonanz eingestellt und versucht, die Segregation weitgehend zu unterdrücken.

**Darstellung der Erfindung**

Es ist eine Aufgabe der vorliegenden Erfindung, eine Hochdruckentladungslampe mit keramischem Entladungsgefäß gemäß dem Oberbegriff des Anspruchs 1 bereitzustellen, die im Betrieb mit akustischer Resonanz die für eine Segregationsunterdrückung verwendete akustische Leistung minimiert.

Diese Aufgabe wird durch die kennzeichnenden Merkmale des Anspruchs 1 gelöst. Besonders vorteilhafte Ausgestaltungen finden sich in den abhängigen Ansprüchen.

Der Betrieb mit akustischer Resonanz ist darauf ausgerichtet, eine oder mehrere Resonanzmoden anzuregen, die die zweite longitudinale Resonanz enthalten oder mit dieser gekoppelt sind. Damit sind insbesondere Frequenzen gemeint, wie sie in US 2005/067975 als Kombinationsmode bezeichnet sind, also ein Mode, dessen Frequenz sich beispielsweise aus den Frequenzen von longitudinaler und weiterer azimutaler und/oder radialer Resonanz gesetzmäßig errechnet. Dabei ist es möglich, evtl. eine Amplitudenmodulation zu nutzen und insbesondere mittels Pulsweitenmodulation zu takten.

Dies schafft insbesondere Möglichkeiten der Farbsteuerung von Metallhalogenidlampen mittels getakteter und/oder strukturierter Amplituden-Modulation, beispielsweise in Form von Pulsweitenvariation, evtl. kombiniert mit Pulshöhen-Variation, bei gleichbleibendem Lampenleistungsniveau.

Es wird dabei davon ausgegangen, dass für eine vorgegebene Geometrie des Entladungsgefäßes ein enger Toleranzbereich für die Innenlänge IL vorliegt. Sie stellt diejenige Dimension der Lampe dar, die die longitudinalen akustischen Resonanzen definiert, welche für eine etwaige optimale Durchmischung des Bogenplasmas, insbesondere bei vertikaler Brennlage, angeregt werden muss.

In vertikaler Brennlage ergeben sich aufgrund der Entmischung stark veränderte Schallgeschwindigkeiten gegenüber horizontaler Brennlage, die durch die Entmischung bei senkrechter Konvektion der im Plasma strahlenden Teilchen hervorgerufen werden.

Der Resonanzbetrieb geht insbesondere aus von einem Betrieb mit einer Trägerfrequenz des Lampenstroms im mittleren HF-Bereich. Die Trägerfrequenz entspricht in etwa der Frequenz der halben zweiten azimutalen akustischen Resonanz, wenn die Lampe im gewöhnlichen Betriebszustand ist. Mit Trägerfrequenz ist immer entweder die Frequenz des Stromsignals oder Spannungssignals gemeint. Dagegen ist für die Anregung der akustischen Resonanz immer die Leistungsfrequenz maßgeblich, die beim Doppelten der Anregungsfrequenz von Strom oder Spannung liegt.

Ein Anhaltspunkt ist beispielsweise eine Geometrie des Entladungsgefäßes mit konischer Endenform bei einer 70 W-Lampe, wobei die Trägerfrequenz im Bereich von 45 bis 75 kHz, typisch 50 kHz, liegt, und wobei dieser Trägerfrequenz bevorzugt eine Sweepfrequenz als FM-Modulation aufgeprägt ist, deren Wert ausgewählt ist aus einem Bereich von 100 bis 200 Hz. Diesem Betrieb wird vorteilhaft eine Amplitudenmodulation aufgeprägt, die beispielsweise durch mindestens eine der beiden Parameter AM-Grad und Zeitdauer der AM, also einem Puls-Pausen-Verhältnis sowie zeitgesteuerter AM-Tiefe AM(t) charakterisiert ist.

Im einzelnen wird bei hocheffizienten Metallhalogenidlampen mit keramischem Entladungsgefäß mit großer Innenlänge ein Aspektverhältnis (innere Länge/innerer Durchmesser) des Entladungsgefäßes) von mindestens 2,5 bevorzugt, insbesondere IL/ID =2,5-5,5. Dabei wird mit mittel- bis hochfrequentem AM-Betrieb über den Amplituden-Modulationsgrad die Intensität einer oder mehrerer longitudinaler Moden (bevorzugt die zweite oder vierte) angeregt. In diesen Moden wird die Füllung in den Zentralbereich des Entladungsgefäßes transportiert und somit die Füllungsverteilung im Entladungsgefäß entlang des Bogens eingestellt. Dies ist insbesondere bei vertikal oder schräg (> 55° Neigungswinkel der Lampe) betriebenen Lampen besonders wichtig. Hierdurch verändert sich die Zusammensetzung des Dampfdruckes und auch die spektrale Absorption der abgelagerten Füllungsbestandteile. Die Modulationsfrequenz (Grundfrequenz der AM) zum Anregen der longitudinalen Moden liegt typischerweise im Frequenzbereich von 20-35 kHz. Bei einer Trägerfrequenz von typisch 45-75 kHz wird dazu eine FM (Frequenzmodulation) mit Sweep-Moden im Bereich von ca. 100-200 Hz durchgeführt.

Typische Metallhalogenid-Füllungen enthalten Komponenten wie DyJ3, CeJ3, CaJ2, CsJ, LiJ und NaJ, evtl. auch TlJ.

Es wurden bisher verschiedene Betriebsmoden zur stabilen Einstellung von Segregationsunterdrückung in Lampen mit hohem Aspektverhältnis des Entladungsgefäßes beschrieben.

Es zeigt sich insbesondere, dass bei einigen besonders gut geeigneten Betriebsarten, die die zweite longitudinale akustische Resonanz zur Unterdrückung der Segregation nutzen, -- insbesondere bei gleichzeitiger Nutzung von FM- und AM-modulierten HF-Stromformen oder bei zeitlich sequentieller Nutzung, insbesondere FM-Modulation abwechselnd mit Festfrequenzbetrieb, siehe beispielsweise US 6 184 633 B -- rein zylindrische Formen des Entladungsgefäßes sogar akustische Instabilitäten aufgrund der hohen Resonatorgüte erzeugen und damit für den genannten Betrieb nur begrenzt geeignet sind. Elektronische Vorschaltgeräte müssen bisher aufwendige und komplexe Kontrollmechanismen nutzen, um diese Instabilitäten abzufangen.

Es wird nunmehr eine spezielle Ausbildung der Innenkontur des Entladungsgefäßes und insbesondere des Elektrodenrückraumes vorgeschlagen, die sich bevorzugt für einen Betriebsmodus anwenden lässt, der zumindest zeitweise den 2. akustischen longitudinalen Resonanzmodus oder die Kombination dieses Modus mit der Anregung von radialen oder azimutalen Moden nutzt.

Die vorgeschlagene Lösung ist besonders effektiv für Entladungsgefäße mit eine Aspektverhältnis AV von mindestens 2,5 und höchstens 8. Mit anderen Worten soll gelten:

$$2{,}5 \leq IL/ID \leq 8. \hspace{4cm} (1)$$

Besonders bevorzugt ist ein Bereich $4 \leq AV \leq 5{,}5$. Das Aspektverhältnis ist definiert als Verhältnis Innenlänge IL zu Innendurchmesser ID(=2*IR) mit IR = Innen-Radius. Dabei bezieht sich der Innenradius IR aber nur auf ein Mittenteil des Entladungsgefäßes, das zylindrisch verbleibt.

Bevorzugt wird jetzt ein Betriebsverfahren genutzt, das den Entladungsbogen stabilisiert durch sequentielles rampenförmiges Überfahren der 2. azimuthalen akustischen Resonanz. Dadurch wird eine Bogenstraffung in jeder Brennlage erzeugt. Durch zumindest zeitweise stabile Anregung einer geradzahligen, bevorzugt 2., 4., 6. oder 8. longitudinale Resonanz wird die axiale Segregation effektiv aufgehoben.

In keramischen Hochdruckentladungslampen des Standes der Technik werden häufig Kapillarrohre als Ansätze am Entladungsgefäß zur Elektrodendurchführung verwendet, in welchen die Elektrodensysteme an den eigentlichen Brennerkörper geführt werden. Durch die Konstruktion der Elektrodensysteme in Form von segmentierten Teilen, meist mit Durchführungen aus Metallgewickeln (aus Mo oder W / z.T. legiert bzw. dotiert), entstehen in den Durchführungsbereichen an den Brennerraum angrenzende Vertiefungen und Hohlräume im Elektroden-Rückraum.

Für die Anwendung von longitudinalen stehenden Schallwellen in derartigen Hochdrucklampen hat sich gezeigt, daß derartige Hohlräume dämpfende Elemente im Bereich der ansonsten den Schall reflektierenden Rückwände darstellen. Dies macht sich dadurch bemerkbar, daß bei Verwendung vergrößerter Vertiefungen durch verschieden lange Metallgewickel, welche den Kapillarraum unterschiedlich ausfüllen, sich die akustische Dämpfung der stehenden longitudinalen Welle vergrößert. Ähnliches gilt bei Verwendung von Metallgewickeln oder Cermetkörpern, welche relativ große Spaltweiten zur Innenwand der Keramischen Kapillare erforderlich machen und somit die Spaltweite in der Kapillare vergrößern. Für die effektive Einstellung einer longitudinalen akustischen Resonanz zur Segregations-Unterdrückung wird daher wegen der Dämpfung eine relativ große akustische Leistung, z.B. durch Notwendigkeit der Erhöhung des Amplitudenmodulationsgrades bei einem AM+ FM Sweep-Verfahren, benötigt. Die Erhöhung der akustischen Leistung zur Segregations-Unterdrückung führt zu einer Verringerung der Lampen-Effizienz um typischerweise 4-7% der Lampenausbeute pro 10% Erhöhung des verwendeten akustischen Leistungseintrages zur Unterdrückung der Segregation.

Die Erfindung betrifft die Ausgestaltung des Endbereichs, insbesondere auch der Durchführung, im Bereich des Überganges von der Kapillare in den Brennerinnenraum.

Es hat sich gezeigt, dass es im Bereich der Kapillare darauf ankommt, daß innerhalb eines Abschnitts LSP, der einer axialen Länge vom Vierfachen des Innendurchmessers IDK der Kapillare entspricht und der an die Stirnfläche am Ende des Brennerinnenraums angrenzt, zumindest der Beginn einer Engstelle zur Innenwand der Kapillare hin mit einer Spaltweite von höchstens 20 $\mu$m liegt. Diese Engstelle dient dazu, die Dämpfung zu beseitigen. Somit kann der notwendige akustische Leistungsanteil zur Einstellung der Segregationsunterdrückung minimiert werden.

Dies kann durch Verwendung einer geeignet gestalteten Durchführung geschehen, die entladungsseitig als Frontteil ein an den Innendurchmesser der Kapillare gut angepasstes Gewickel aufweist. Alternativ kann das Frontteil auch ein metallisches oder cermet-haltiges Zylinderteil sein. Dieses kann auch integraler Teil der Elektrode sein. Am günstigen hat sich herausgestellt, daß das Frontteil mit Außendurchmesser DFR im Ausgangsbereich der Kapillare sitzt und dabei die Kapillare eben abschließt oder dass das Frontteil höchstens leicht in die Kapillare versenkt ist und zwar nicht tiefer als die axiale Länge LSP, die dem Vierfachen des Innen-Durchmessers IDK der Kapillare entspricht.

Noch günstiger sind die Ergebnisse bzgl. Dämpfung, wenn der entladungsseitige Endbereich der Kapillare mehr oder weniger vollständig verschlossen wird. Dies kann z.B. durch Presspassung oder Lötung des Elektrodensystems in den Keramikstopfen beim Einbau erfolgen, so dass zumindest an einer Engstelle kein Spalt zwischen Elektrodensystem und Keramikwandung mehr auftritt.

Damit lässt sich die geringste akustische Leistung zur Anregung der longitudinalen akustischen Resonanz erzielen, die notwendig ist, um eine Segregationsunterdrückung zu gewährleisten.

Als wesentliche zweite Maßnahme ist erforderlich, dass der Endbereich des Entladungsgefäßes quer zur Achse des Entladungsgefäßes steht, so dass er eine Stirnfläche über eine Länge von insgesamt 15 % bis 85 % des maximalen Innendurchmessers ID des Entladungsgefäßes bildet.

Als dritte wesentliche Maßnahme ist erforderlich, dass sich das Ende des Entladungsgefäßes zur Stirnfläche hin verengt. Besonders bevorzugt ist eine Verengung, die eine kontinuierliche konkave Krümmung aufweist und damit am besten eine laminare Strömung sichert.

Bevorzugt ist dabei der Druck der Füllung im Entladungsgefäß sorgfältig zu wählen.

Günstig haben sich schräg zur Lampenachse und damit zur Ausbildungsrichtung von longitudinalen Moden verlaufende Konturen des Endbereichs herausgestellt, die den Innendurchmesser annähernd kontinuierlich verjüngen. Das entspricht dreidimensional einer konischen oder trichterförmigen Verjüngung.

Die Übergangskontur des Endbereichs kann aber auch konkav, also nach außen gewölbt --z.B. halbkugelschalenartig-- oder konvex , also nach innen gewölbt --z.B. als Rotationsfläche eines Ellipsenausschnittes-- verlaufen und kann dann ab etwa einer Einschnürung auf 0,6*ID wieder in eine senkrecht zur Lampenachse verlaufende Innenwandung als Stirnfläche übergehen. Dies kann gegebenenfalls direkt als Übergang in die Kapillare oder ein Stopfenteil verstanden werden. Besonders bevorzugt liegen zwei verschieden gekrümmte Abschnitte, einer konkav und einer konvex, hintereinander.

Bei konkavem Verlauf des Endbereichs sollte der Krümmungsradius KR maximal gleich dem halben Innendurchmesser IR = ID/2 sein, bei konvexem oder linear verlaufender konischer Verjüngung sollte die Tangente am innen gelegenen Endpunkt des Endbereichs einen spitzen Winkel $\alpha$e von höchstens 45° mit der achsparallelen Ausrichtung des Mittenbereichs einnehmen.

Ein Beispiel eines rein konvex gekrümmten Endbereichs ist eine trompetentrichterförmig geformte Innenkontur, insbesondere eine als Ausschnitt eines Hyperboloids geformte Innenkontur.

Insbesondere nimmt einen starken Einfluss auf die Dämpfung eine zentrale Zone des Endbereichs der Länge LRD, in einem Abstand vom Ende des Innenvolumens, der vom Ende des Entladungsgefäßes aus betrachtet mindestens zwischen 0.40*LRD bis 0.60*LRD sich erstreckt. Hier soll der Tangentenwinkel $\alpha$t der Innenkontur gegenüber der axialen Richtung von der Achse aus gemessen bevorzugt im Bereich zwischen $\alpha$t = 15° und $\alpha$t = 45° liegen. Besonders bevorzugt liegt er im Bereich zwischen $\alpha$t = 25° und $\alpha$t = 35°.

Ein Kriterium für die konkrete Auswahl des Verlaufes der inneren Kontur des Endbereichs ist insbesondere die Resonatorgüte bei Anregung der 2. longitudinalen akustischen Resonanz. Die Resonatorgüte muss selektiv für die Anregung der 2. longitudinalen Resonanz 2L ein genügend hohes Maß erreichen. Die Resonatorgüte lässt sich aus der für die Anregung der zweite Longitudinalen notwendigen Leistungsanteilen im Leistungsfrequenzspektrum ableiten. Typisch liegt sie bei ca. 5 bis 20 % der Lampenleistung in diesem Bereich.

Je nach Betriebsart gilt dies auch für mit dieser Resonanz gekoppelte Resonanzen, wie sie bei Mischmoden auftreten, beispielsweise radial-longitudinale oder azimuthal-longitudinale Resonanzen. Typisch sind die Anregungsmoden 1R+2L oder 3AZ+2L. Am besten geeignet sind solche Konturen, die gleichzeitig für höhere Harmonische der 2L eine deutlich verringerte Resonatorgüte aufzeigen, diese also möglichst dämpfen.

Hervorragende Bedingungen für die Auslegung der Innenkontur von hocheffizienten Keramiklampen für den Betrieb im kombinierten AM+FM-Betrieb werden erzielt bei einer gezielten kombinierten Anregung der 2.+ ggf. 4. longitudinalen Resonanz und deren Kombination mit der longitudinal-radialen Resonanz bei gleichzeitiger möglichst guter Unterdrückung der 8. longitudinalen Resonanz und deren Resonanz-Kombinationen.

Wesentlich dafür ist zunächst einmal die Bereitstellung einer ausreichend großen Stirnfläche am Resonatorende, deren Durchmesser IDE wenigstens 15 % des zylindrischen Innendurchmessers ID ausmacht. Bevorzugt sollte der Innendurchmesser IDE mindestens 20 % des zylindrischen Innendurchmessers ID ausmachen.

Die Kombination der o.e. akustischen Resonanzen im Entladungsgefäß lässt die Einstellung verbesserter, akustisch erzeugter Konvektionszellen-Muster unter erhöhten Druckbedingungen im konvektionsbestimmten Bogenplasma-Bereich zu, derart, dass Kombinationen von erhöhten Lichtausbeuten von 120 lm/W oder sogar mehr mit einer Farbwiedergabe Ra von mehr als 85 und typisch 90 über längere Betriebszeiten von typisch 4000 h - 6000 h bei gutem Maintenance-Verhalten erreichbar sind.

Dabei zeigt sich, dass eine Verengung der Lampen-Innenkontur im Enden-Bereich des Entladungsgefäßes über eine Länge LRD bevorzugt ist:

LRD = 0,095 x IL bis 0,155 x IL, wobei ein typischer Wert LRD = 0,125 x IL ist.

Dabei ist LRD auf die gesamte Innenlänge IL der Lampe bezogen und endet in einer Stirnfläche mit einem reduzierten Innendurchmesser IDE. Diese Randbedingungen sind für die Erzeugung eines stabilen Konvektionszellengebildes ideal, welches über das stehende akustische Wellenfeld im Plasmagas erzeugt wird, um eine optimale Durchmischung des Bogenplasmagases zu erzielen, so dass in beliebiger Lampenlage eine Farbentmischung des Plasmas vollständig unterdrückt wird.

Der Innendurchmesser der Lampe wird über den Endenbereich bevorzugt kontinuierlich reduziert derart, dass ein Übergang vom annähernd zylindrischen Mittenteil mit Innendurchmesser ID zum sich verjüngenden Endenbereich in einem konkaven Radius R1 der Verjüngung mündet.

Bevorzugt ist $ID/6 \leq R1 \leq ID/2$. Typische Werte liegen bei 0,35 ID bis 0,5 ID.

Besonders bevorzugt ist ein Bereich LRD der Verengung, der grob gesprochen S-förmig gekrümmt ist. Die Reduzierung des Innendurchmessers geht dabei ausgehend von einem konkav verlaufenden Radius R1 über einen Wendepunkt in einen konvex verlaufenden Radius R2 über, der auf eine senkrecht zur Lampenachse verlaufende Stirnfläche mit resultierendem Durchmesser IDE trifft.

Bevorzugt ist: $ID/4 \leq R2 \leq ID$. Ein typischer Wert ist R2 = 0,65 ID.

Insbesondere hat sich gezeigt, dass der Durchmesser der Stirnfläche IDE in einem Bereich zwischen 0,15 und 0,85 ID liegen sollte.

Besonders gute Ergebnisse werden erzielt, wenn dieser Durchmesser IDE an den ursprünglichen Innendurchmesser ID des Entladungsgefäßes geeignet angepasst ist. Grob gesprochen sollte das Verhältnis zwischen IDE und ID umso kleiner sein, je größer ID selbst ist. bevorzugt gilt die Richtschnur, dass VID = IDE/ID = a x ID + b, mit a = -0.120 bis -0.135, und mit b = 1.0 bis 1.1.

Bei zylindrischen Endenformen sind die Werte der Resonatorgüte für 2L und höheren Harmonischen wie 4L oder 6L miteinander vergleichbar. Dies führt bei im wesentlichen zylindrischen Entladungsgefäßen dazu, dass bei Überfahren der akustischen 2. longitudinalen Resonanz -- bedingt durch die sehr hohe Resonatorgüte -- höhere harmonische Resonanzen anspringen, die zum Beispiel im Falle einer Amplitudenmodulation angeregt werden. Dadurch bilden sich zusätzliche akustisch bestimmte Konvektionszellen aus, die u.U. zu Impedanzsprüngen und zum Verlöschen der Bogenentladung führen können. Beim Überfahren der 2. longitudinalen Resonanzfrequenz $f_{res\_2L}$ von einer höheren Anregungsfrequenz aus --typisch von $f_{start}AM = f_{res\_2L} + 5$ kHz bis $f_{stop}AM = f_{res\_2L} - 5$ kHz bei einem typischen AM-Grad von 10 - 30 % --treten dann starke Lampen-Impedanzvariationen und Bogenunruhe auf, was zu instabilen Lampenverhältnissen führt. Auch ein Einstellen der Anregungsfrequenz auf eine Frequenz in der Nähe der verstärkt auftretenden Lampenimpedanz-Variation kann zu unerwünschter Bogenunruhe führen.

Verbunden damit sind deutlich schwankende Lampen-Impedanzwerte mit Spitzenwerten, die das 1.5-fache der im nichtangeregten Zustand vorhandenen Lampenimpedanz überschreiten. Dabei kann es zum Verlöschen der Lampe kommen. Ein Modus zur stabilen verbesserten Unterdrückung einer in vertikaler oder schräger Brennstellung der Lampe vorhandenen Segregation der Bogensäule kann somit nicht eingestellt werden.

Dies gelingt erst bei Wahl der erfindungsgemäßen Endenformen. Ein Überfahren der 2. longitudinalen Resonanzfrequenz von höherer Anregungsfrequenz aus -- typisch von $f_{start}AM = f_{res\_2L} + 5$ kHz bis $f_{stop}AM = f_{res\_2L} - 5$ kHz bei einem typischen AM-Grad von 15 - 35 % -- führt zur Ausbildung von stabilen Bogenformen mit Unterdrückung des Anspringens von höheren harmonischen Resonanzen. Es zeigt sich eine stabile Ausbildung von zwei symmetrischen Bogeneinschürungen bei ca. 1/3 bis 1/4 bzw. ca. 2/3 bis 3/4 der Innenlänge IL im Frequenzbereich der Amplitudenmodulationsfrequenz fAM zwischen fAM = $f_{res\_2L}$ bis typisch fAM = $f_{res\_2L}$ -1kHz. Bei weiterer Verringerung der fAM wird die Anregung der zweiten Longitudinalen stabil beendet ohne dass eine Bogeninstabilität erfolgt, wobei sich zwei zur Lampenmitte symmetrischen Bogeneinschnürungen ausbilden, und zwar bei reproduzierbaren Grenzfrequenzen fA-

$M_{end}$.

## Kurze Beschreibung der Zeichnungen

Im folgenden soll die Erfindung anhand mehrerer Ausführungsbeispiele näher erläutert werden. Es zeigen:

Figur 1 eine Hochdruckentladungslampe, schematisiert;

Figur 2 ein Entladungsgefäß einer Hochdrucklampe, schematisiert;

Figur 3 - 7 verschiedene Ausführungsformen des Endes des Entladungsgefäßes;

Figur 8 den schematischen Aufbau eines elektronischen Vorschaltgeräts;

Figur 9 und 10 die akustische Leistung und die Effizienz einer derartigen Lampe,

Figur 11 ein weiteres Ausführungsbeispiel des Endes eines Entladungsgefäßes.

## Bevorzugte Ausführung der Erfindung

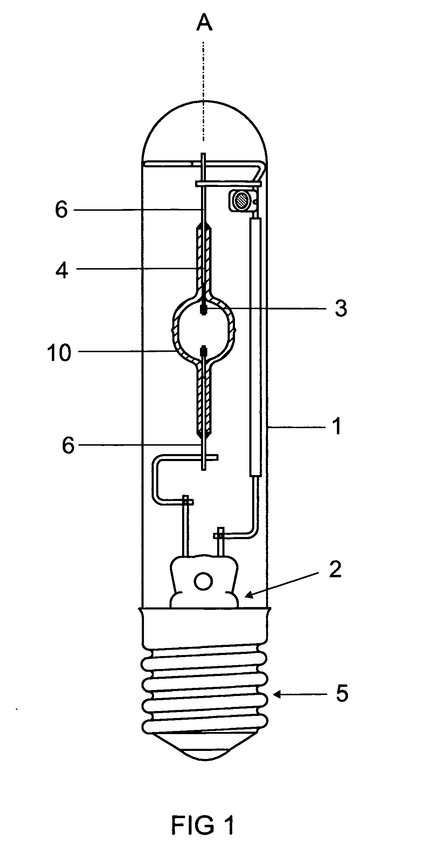

In Figur 1 ist schematisch eine Metallhalogenidlampe gezeigt mit einem Außenkolben 1 aus Hartglas oder Quarzglas, der eine Längsachse besitzt und einseitig durch eine Tellereinschmelzung 2 verschlossen ist. An der Tellereinschmelzung 2 sind zwei äußere Stromzuführungen nach außen (nicht sichtbar) geführt. Sie enden in einem Sockel 5. Im Außenkolben ist ein zweiseitig abgedichtetes keramisches Entladungsgefäß 10 aus PCA ($Al_2O_3$) mit zwei Elektroden 3 und einer Füllung aus Metallhalogeniden axial eingesetzt.

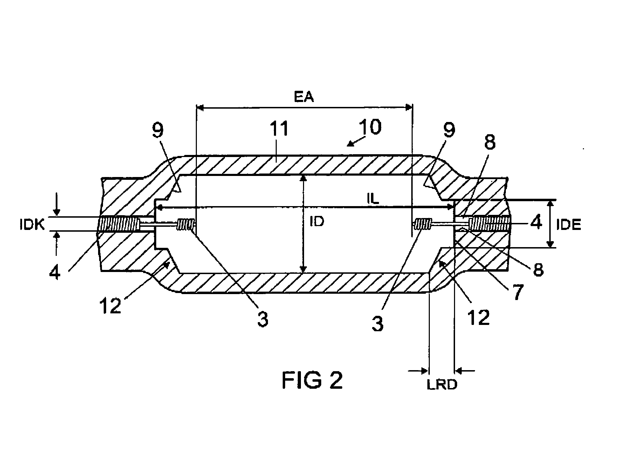

In Fig. 2 ist eine schematische Darstellung des Entladungsgefäßes 10 mit relativ hohem Aspektverhältnis ID/IL gezeigt. Das Entladungsgefäß 10 hat ein zylindrischem Zentralteil 11 und zwei Enden 12, mit einem gegebenem Innendurchmesser ID=2*IR, wobei IR der Innenradius ist, und gegebener Innenlänge IL. An den Enden 12 des Entladungsgefäßes sind Elektroden 3 angeordnet, die mittels Durchführungen 4 mit inneren Stromzuführungen 6 (siehe Figur 1) verbunden sind. Das Entladungsgefäß enthält typisch eine Füllung aus Puffergas Hg mit Argon und Metallhalogeniden, beispielsweise einer Mischung aus Alkali- und Seltenerdjodiden sowie des Thallium.

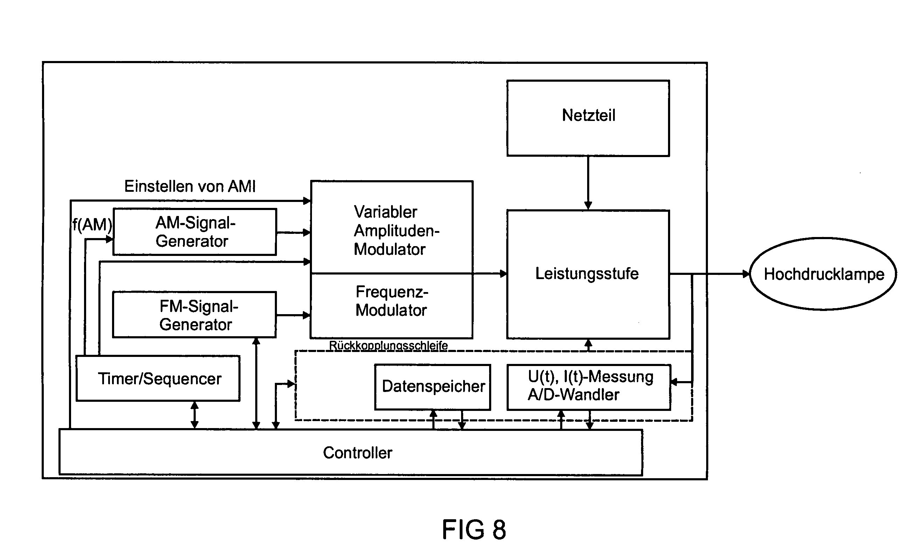

Die Lampe wird an einem elektronischen Vorschaltgerät, siehe Figur 8, mit Hochfrequenz in akustisch stabilisierter Resonanz betrieben. Dafür hat sich vor allem die zweite longitudinale Resonanz oder damit zusammenhängende Resonanzen empfohlen.

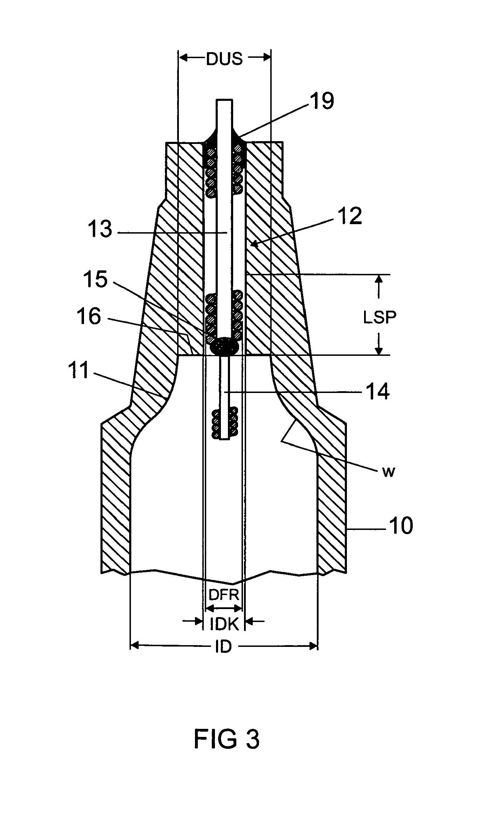

Ein konkretes Ausführungsbeispiel ist ein keramisches Entladungsgefäß 10 mit konischem Endbereich 11 und Kapillare 12 mit Innendurchmesser IDK, mit einer Durchführung 13, die stiftförmig ist und der ein Gewickel frontseitig aufgeschoben ist, siehe hierzu Figur 3. Der Schaft 14 der Elektrode ist am Stift verschweißt, der Schweißpunkt ist mit 15 bezeichnet. Effektiv verbleibt eine geringe Spaltweite = 20 $\mu$m bei einem Gewickel-Durchmesser DFR= 0,64 mm ggü. einem konstanten Innendurchmesser der Kapillare IDK =0,68 mm.

Bei diesem konkreten Ausführungsbeispiel ist die notwendige akustische Leistung, um eine optimale Segregations-Unterdrückung in einem Bereich von $f_{opt}$ bis $f_{opt}$-1kHz zu erzielen etwa 10% der gesamten Leistung. Anders ausgedrückt beträgt die Breite des Frequenzbandes zur optimalen Segregationsunterdrückung mindestens 1 kHz.

Wählt man dagegen den Gewickel-Durchmesser DFR= 0,55 mm bei gleichen sonstigen Konstruktionsdaten und gleicher Füllung, so beträgt die notwendige akustische Leistung etwa 18% bis 20 % der gesamten Leistung.

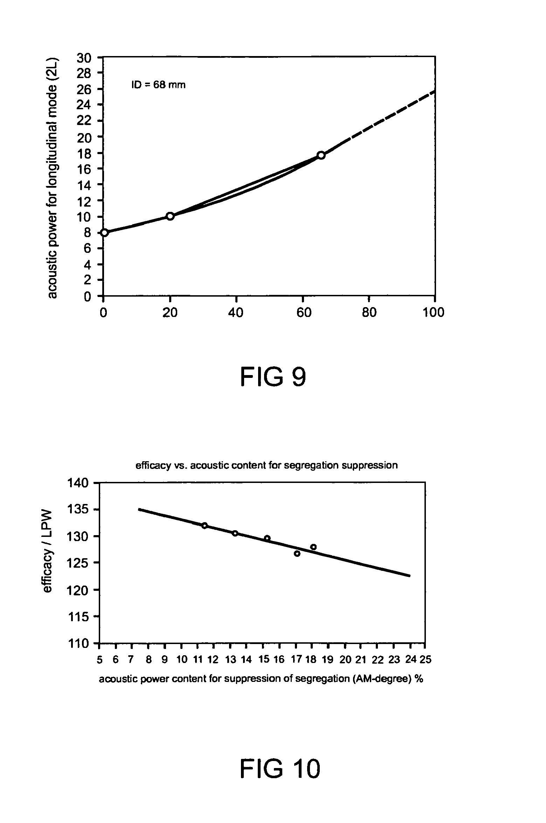

Bei einem vollständigen bündigen Verschluss , also Spaltbreite 0 oder DFR = IDK wird lediglich 8% akustische Leistung benötigt, siehe Figur 9.

Bei Einhaltung der obigen technischen Lehre kann bei hocheffizienten Lampen eine Effizienzsteigerung von z.B. 125 LPW auf 135 LPW erzielt werden, siehe Figur 10.

Die geometrischen Verhältnisse werden typisch gemäß Tab. 1 gewählt. Dort ist die Wattage des Entladungsgefäßes angegeben (erste Spalte). In der zweiten Spalte ist IDK, der Durchmesser der Bohrung in der Kapillare, angegeben.

Tab. 1

| Wattage | IDK ($\mu$m) | Max. ID Brenner | Durchm. Stirnfläche (DUS) | Verhältnis DUS/ID | Verhältnis (%) der Flächen IDK/Stirnfläche |
|---|---|---|---|---|---|
| 20 W | 500 | 2 mm | 1,7 mm | 0,85 | 8,7 |

(fortgesetzt)

| Wattage | IDK ($\mu$m) | Max. ID Brenner | Durchm. Stirnfläche (DUS) | Verhältnis DUS/ID | Verhältnis (%) der Flächen IDK/Stirnfläche |
|---|---|---|---|---|---|
| 35 W | 500 | 2,7 mm | 1,9 mm | 0,7 | 7,0 |
| 70 W | 680 | 4 mm | 2,4 mm | 0,6 | 8,0 |
| 150 W | 850 | 6 mm | 2,6 mm | 0,43 | 10,7 |

Spalte 3 zeigt den maximalen Innendurchmesser ID des Entladungsgefäßes. Spalte 4 gibt den Durchmesser der Stirnfläche (DUS), die quer zur Längsachse des Entladungsgefäßes steht, an. Spalte 5 zeigt das Verhältnis zwischen dem Durchmesser und dem maximalen Innendurchmesser ID des Entladungsgefäßes an. Es ist bei kleiner Wattage relativ hoch zu wählen, bei hoher Wattage kann es deutlich kleiner gewählt werden. Schließlich gibt Spalte 6 das Verhältnis zwischen der Fläche der Bohrung der Kapillare und der Stirnfläche an. Dieses Verhältnis muss in einem Bereich von 6 bis 12 % gewählt werden um die Dämpfung möglichst gering zu halten.

Wichtig ist, dass die Kapillare integral mit dem Entladungsgefäß ist, so dass kein zusätzlicher Übergang in Form einer Treppenstufe oder sonstigen Nahtstelle entsteht. Eine vertieft eingesetzte separate Kapillare würde zu zusätzlichen destruktiven Interferenzen bei der Reflexion der Schallwellen führen und außerdem die laminare Strömung stören. Daher sollte die Stirnfläche möglichst homogen ausgebildet sein und nur im Zentrum eine Kapillare als Störung enthalten. Das Frontende der Durchführung kann in der Kapillare in einer Tiefe zwischen 0 (also der Ebene der Stirnfläche) und maximal dem Vierfachen von IDK enden. Die geringste Dämpfung ergibt sich bei möglichst geringer Tiefe. Jedoch ist hier die Wärmebrücke am größten. Am besten ist diese Einsetztiefe zwischen dem Einfachen und Vierfachen von IDK gewählt.

Figur 3 zeigt ein Lampenende, bei dem der maximale Innendurchmesser ID des Entladungsgefäßes sich in zwei Abschnitten auf den Beginn der Stirnfläche 16 verringert. Beste Ergebnisse werden erzielt, wenn der erste Abschnitt, der an ID anschließt, konkav gekrümmt ist, und der zweite Abschnitt, der an die Stirnfläche anschließt, konvex gekrümmt ist. Dabei sollte insbesondere der Wendepunkt zwischen beiden Abschnitten eher im vorderen, der Entladung zugewandten Abschnitt von LRD liegen. Bevorzugt sollte aus strömungstechnischen Gründen der vordere Abschnitt einen Krümmungsradius R1 besitzen, der in etwa, zumindest auf 20 % genau, der Hälfte des Durchmessers ID entspricht. Für den Krümmungsradius R2 des hinteren Abschnitts sollte gelten, dass R1 < R2 gewählt wird, insbesondere dass gilt R2= 1,1 bis 1,3 R1. Die Stirnfläche hat einen Durchmesser DUS. Zentral in der Stirnfläche sitzt die Kapillare 12 mit einem konstanten Innendurchmesser IDK. Die Elektrode hat einen Kopf und einen Schaft, der mit einem Durchführungsstift verschweißt ist. Auf dem Durchführungsstift sitzt ein Gewickel mit maximalen Außendurchmesser DFR. Die Spaltbreite ist etwa 15-20 $\mu$m. Die Spaltbreite hinter dem Gewickel spielt keine Rolle. Am Ende der Kapillare sitzt eine weiteres Gewickel, das mittels Glaslot 19 abgedichtet ist. der Übergang zwischen Stirnfläche und zweitem Abschnitt sollte abgerundet, also möglichst ohne Kante, sein.

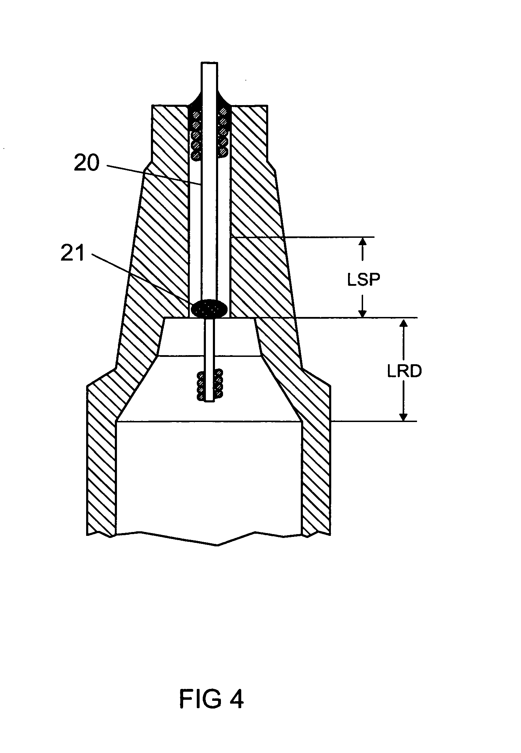

Figur 4 zeigt einen Stift 20 aus Wolfram als Durchführung, der kein Gewickel am entladungsseitigen Ende besitzt. Statt dessen sitzt dort lediglich eine verdickte Schweißstelle 21, deren Engstelle so bemessen ist, dass innerhalb der Länge LSP der maximale Durchmesser der Schweißperle nur noch einen Spalt von etwa 10 $\mu$m zur Innenwand der Kapillare belässt. Die Schweißperle sitzt nahe dem Beginn der Kapillare.

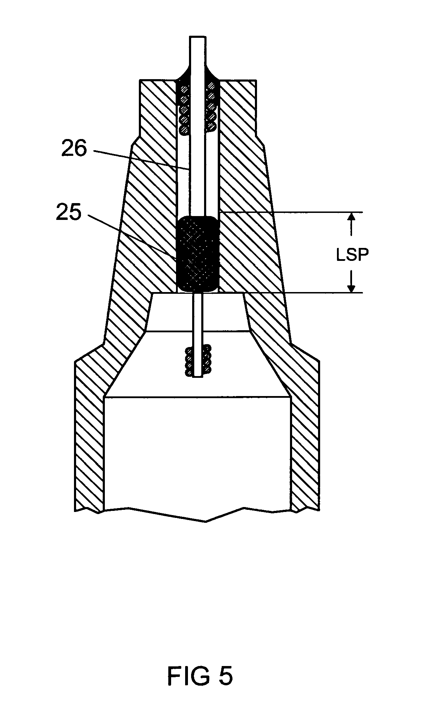

Figur 5 zeigt ein cermethaltiges Ausfüllteil 25 als frontseitiges Teil der Durchführung. Dahinter sitzt ein Stift 26 aus Mo mit deutlich geringerem Durchmesser. Auch hier ist die Spaltbreite zwischen Ausfüllteil und Innenwand der Kapillare sehr klein und liegt in der Größenordnung 10 $\mu$m, und zwar über eine Länge von nahezu der gesamten Länge LSP.

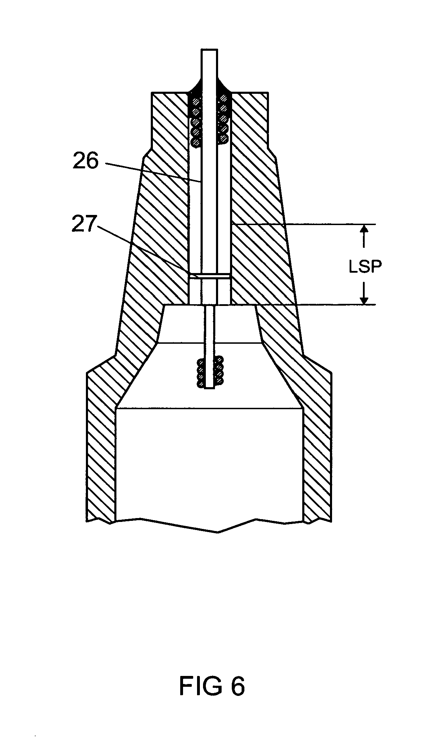

Figur 6 zeigt ein weiteres Ausführungsbeispiel, bei dem der enge Spalt lediglich durch eine auf oder vor den Stift 26 der Durchführung quer aufgebrachte Scheibe 27 realisiert ist. Die Scheibe ist aus Mo oder W oder einer Legierung, die Mo oder W enthält, gefertigt und hat eine Dicke von wenigen Zehntel Millimetern.

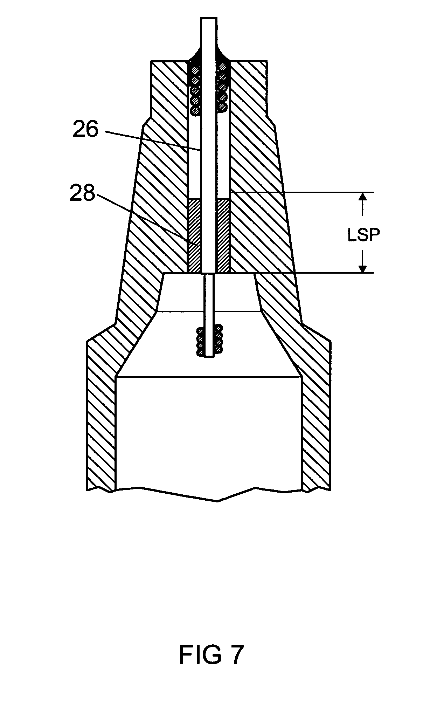

Schließlich zeigt Figur 7 ein Ausführungsbeispiel, bei dem ein erheblicher Anteil von LSP durch ein geeignetes Material oder durch eine Presspassung oder Lötung der Elektrode verschlossen ist. Die Spaltbreite ist hier also null. Es handelt sich beispielsweise um einen Pfropfen 28 aus geeignetem Material wie Glasfritte, Schmelzkeramik oder Hartlot-Material oder Pt-Legierung. Konkrete Beispiele sind Schmelzkeramiken des Systems A1203, Y2O3, Ce2O3.

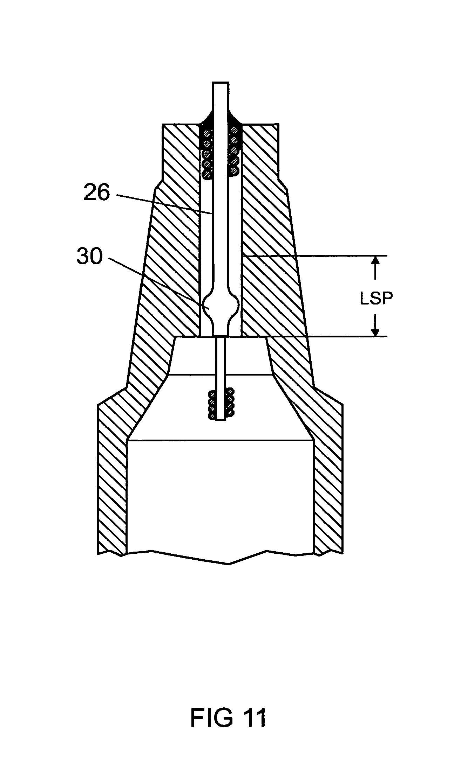

Figur 11 zeigt ein weiteres Ausführungsbeispiel, bei dem die Durchführung (oder der Elektrodenschaft) im Bereich LSP eine Verdickung 30 besitzt, die integraler Bestandteil der Durchführung ist und aus der Durchführung heraussteht. Eine derartige Durchführung oder Elektrode lässt sich beispielsweise mittels Laserbearbeitung herstellen.

Hinsichtlich des Betriebs mit akustischer Resonanz sei folgendes Ausführungsbeispiel näher erläutert.

Ein Ausführungsbeispiel ist eine hocheffiziente Metallhalogenidlampe mit 70 W Leistung. Das Entladungsgefäß hat eine größte axiale Innenlänge IL von 18,7 mm und einen Innendurchmesser ID von 4 mm. Das Aspektverhältnis ist somit 4,7. Die Hochdrucklampe ist mit 4,4 mg Hg und einer Metallhalogenidmischung bestehend aus NaI:CeI3:CaI2: T1I = 1,78 : 0,28 : 1,93 : 0,28 mg gefüllt. Der Elektrodenabstand EA beträgt 14,8 mm.

Durch Voruntersuchungen wurde festgestellt, dass ein bogenstabilisierter Betrieb möglich ist, wobei der Bogen in vertikaler und horizontaler Brennlage auf die Elektrodenverbindungslinie zentriert ist. Dafür wird ein Betrieb mit gesweepter Hochfrequenz im Bereich von 45-55 kHz mit typischer Sweep-Rate von fFM = 130 Hz als Ausgangspunkt genommen.

In vertikaler Brennlage zeigt sich nach dem Betriebsstart und einer Aufwärmphase von ca. 120 sec eine segregierte, also entmischte Metallhalogenidverteilung entlang des Bogens. Der in der Dampfphase befindliche Anteil der Metallhalogenide ist nicht gleichmäßig über die Bogenlänge verteilt. Die Emission der Alkali- und SE-Jodide konzentriert sich im unteren Drittel der Lampe, während im oberen Teil bis zur oberen Elektrode hauptsächlich Emission von Hg und Tl beobachtet wird. In diesem Zustand besitzt die Lampe eine relativ geringe Farbwiedergabe und eine relativ geringe Lichtausbeute. Hinzu kommt, dass sich die Farbtemperatur in vertikaler Brennlage wesentlich von der bei horizontaler Brennlage unterscheidet, und zwar um bis zu 1500 K.

Durch das Aufprägen einer Amplitudenmodulation mit einer starren Frequenz $f_{AM}$ von ca. 25 kHz mit AM-Grad von 10-30 % wird ein elektrisches Leistungsspektrum in der Lampe bei einer Sweep-Rate von 130 s-1, also über die Zeitspanne von 7,7 ms, im Bereich 20 bis 150 kHz erzeugt. Der Leistungsanteil im Bereich der AM-Frequenz (25 kHz) wirkt anregend auf die zweite akustische longitudinale Resonanz $f_{002}$.

Höhere Ordnungen werden erfolgreich unterdrückt. Die nahezu ausschließliche Anregung der zweiten longitudinalen akustischen Resonanz erfordert einen ausreichenden Gütefaktor der Lampe als Hohlraumresonator (sog. Resonatorgüte). Diese Güte kann durch den für eine stabile Aufrechterhaltung der zweiten longitudinalen akustischen Resonanz in vertikaler Brennlage notwendigen Leistungsanteil im für die Anregung genutzten Spektralbereich des elektrischen Leistungsspektrums charakterisiert werden. Typisch liegt dieser Wert bei mindestens ca. 10 bis 20 % der Lampenleistung. Für einen stabilen Betrieb sollte allerdings dieser Mindestwert ausreichend überschritten werden. Um Schwankungen der Lampencharakteristika bei einer größeren Anzahl von Lampen möglichst klein zu halten, empfiehlt sich daher eher ein Wert von etwa 15 bis 25 % der Lampenleistung.

Ein geeignetes Betriebsverfahren für derartige Hochdruckentladungslampen nutzt den Resonanzbetrieb, unter Benutzung einer hochfrequenten Trägerfrequenz, die insbesondere mittels Sweepsignal (FM) frequenzmoduliert ist, und die gleichzeitig amplitudenmoduliert (AM) wird, wobei zunächst eine Grundfrequenz der AM definiert wird, wobei die Grundfrequenz der AM $f_{2L}$ vom zweiten, longitudinalen Mode abgeleitet ist.

Dabei kann nach dem Zünden der Lampe und Abwarten einer Karenzzeit die Einstellung der Farbtemperatur bei vorgegebener Leistung dadurch erfolgen, dass die Amplitudenmodulation periodisch zwischen mindestens zwei Zuständen wechselt.

Die Frequenz des Sweepsignals kann von den ersten azimutalen und radialen Modi abgeleitet werden. Insbesondere kann ein Controller die Grundfrequenz des AM-Signals einstellen.

Besonders gute Ergebnisse zeigen sich, wenn ein AM-Grad zur Anregung der zweiten longitudinalen akustischen Resonanz von 10 bis 40 % verwendet wird, insbesondere 10 bis 25 %. Vorteilhaft wird die anregende AM-Frequenz zwischen $f_{2L}$ und $f_{2L}$ - 2 kHz gewählt.

Prinzipiell kann sich die Amplitude eines festen AM-Grads stufenartig, abrupt, allmählich oder differenzierbar mit bestimmter Periodizität ändern.

Ein typisches Betriebsverfahren geht aus von einem Betrieb mit einer Trägerfrequenz im mittleren HF-Bereich von 45 bis 75 kHz, typisch 50 kHz, der bevorzugt eine Sweepfrequenz als FM-Modulation aufgeprägt ist, deren Wert ausgewählt ist aus einem Bereich von 100 bis 200 Hz. Diesem Betrieb wird eine Amplitudenmodulation aufgeprägt, die durch mindestens eine der beiden Parameter AM-Grad und Zeitdauer der AM, also einem Puls-Pausen-Verhältnis sowie zeitgesteuerter AM-Tiefe AM(t) charakterisiert. Evtl. kann das Einsetzen der AM bzw. deren Manipulierung erst nach einer Aufwärmphase einsetzen. Der AM-Grad ist definiert als

AM-Grad = (Amax-Amin) / (Amax+Amin). Dabei ist A die Amplitude.

Neben dem Verfahren beinhaltet die Erfindung ein System aus Hochdruckentladungslampe und Vorschaltgerät, in welches die beschriebenen Prozeduren implementiert sind.

Im einzelnen wird bei hocheffizienten keramischen Metallhalogenidlampen mit großer Innenlänge ein Aspektverhältnis (innere Länge/innerer Durchmesser) des Entladungsgefäßes von mindestens 2,5 bevorzugt, insbesondere IL/ID = 4-5,5. Dabei wird mit mittel- bis hochfrequentem AM-Betrieb über den Amplituden-Modulationsgrad die Intensität einer oder mehrerer longitudinaler Moden (bevorzugt die zweite) angeregt. In diesen Moden wird die Füllung in den Zentralbereich des Entladungsgefäßes und des Plasmas transportiert und somit die Füllungsverteilung im Entladungsgefäß entlang des Bogens eingestellt und Segregationseffekten entgegengewirkt. Dies ist insbesondere bei vertikal oder schräg (bevorzugt mehr als 55° Neigungswinkel) betriebenen Lampen besonders wichtig. Hierdurch verändert sich die Zusammensetzung des Dampfdruckes und auch die spektrale Absorption der abgelagerten Füllungsbestandteile. Die Modulationsfrequenz (Grundfrequenz der AM) zum Anregen der longitudinalen Moden liegt typischerweise im Frequenzbereich von 20-35 kHz. Bei einer Trägerfrequenz von typisch 45-75 kHz wird dazu eine FM (Frequenzmodulation) mit Sweep-Moden im Bereich von ca. 100-200 Hz durchgeführt.

Zur Steuerung kann nun sowohl der AM-Grad allein als auch die Zeitdauer der aufmodulierten AM-Frequenz im Sinne von Puls- und Pausenzeiten verwendet werden. Über diese Parameter AM-Grad und Puls/Pausenverhältnis, also dem Verhältnis zwischen der Zeit T, in der die AM eingeschaltet ist und der Zeit , in der die AM ausgeschaltet ist, abgekürzt T(AM-on)/T(AM-off), sowie außerdem einer zeitgesteuerten variablen Amplitudenmodulationstiefe AM(t), also einer Überstruktur des AM-Grads, lässt sich in großen Bereichen die Farbtemperatur bei hoher Lichtausbeute und gleichbleibender Lampenleistung ändern.

In Fig. 8 ist ein Prinzipschaltbild eines zugehörigen EVGs gezeigt. Es weist folgende essentielle Komponenten auf:

Timer/Sequencer: Hier erfolgt die Zeitschema-Kontrolle zur Steuerung der Zeitdauer der Aufwärmphase und Einsetzen der Prägephase nach Zünden und Bogenübernahme der Hochdrucklampe. Hier erfolgt außerdem die Steuerung der Sweep-Rate für die Lampenbogen-Stabilisierung.

Weiterhin wird die Scan-Rate sowie Verweildauer am jeweiligen Frequenzpunkt beim Durchlaufen von Frequenz-Scans sowie die Festlegung von Pausenzeiten zwischen aufeinanderfolgenden Prozedurschritten gesteuert.

Power stage (Leistungsendstufe): Voll- oder Halbbrücke mit strombegrenzenden Elementen und typischen Frequenzgang. Sie ist über eine Versorgungsschiene (450 V DC) an das Netzteil gekoppelt)

Feed-back-Loop (Rückkopplungsschleife): Betriebserkennung der Lampe evtl. Rückkopplung von Lampenparametern wie Lampenstrom und Lampenspannung zur Einstellung der Steuerparameter und Festlegung von Aufwärmbzw. Prägephase, bzw. Wiederholung von Prägephasen mit anderen Abstimmparametern .

Hier ist ein Schaltungsteil zur hinreichend genauen Messung von Strom und Spannung am EVG-Ausgang (Lampe) implementiert. Über diesen werden über einen A/D-Wandler die Messwerte für die Verarbeitung im Controller weiterverarbeitet. Die anfallenden Daten werden für weitere Auswertungsprozeduren in einen Daten-Speicher geschrieben.

Lampe: Hochdruck-Entladungslampe (HID lamp)

FM-Modulator: Hochleistungsfrequenzmodulator

AM-Modulator: Analoger variabler Hochleistungsmodulator mit Möglichkeit der Kontrolle sowohl der Frequenz fAM als auch des AM-Grades AMI

AM-Signal-Generator: Digital oder Spannungskontrollierter Oszillator

FM-Signal Generator: Digital oder Spannungskontrollierter Oszillator

Power Supply (Netzteil): Rail Voltage Generator

Controller: Zentrale Kontrolle aller Einheiten

Grundsätzlich gilt: der Betrieb erfolgt unter Benutzung einer hochfrequenten Trägerfrequenz, die insbesondere mittels Sweepsignal (FM) frequenzmoduliert ist, und die gleichzeitig amplitudenmoduliert (AM) wird, wobei zunächst eine Grundfrequenz der AM definiert wird, wobei die Grundfrequenz der AM f2L vom zweiten, longitudinalen Mode abgeleitet ist. Insbesondere erfolgt nach dem Zünden der Lampe und Abwarten einer Karenzzeit die Einstellung der Farbtemperatur bei vorgegebener Leistung dadurch, dass die Amplitudenmodulation periodisch zwischen mindestens zwei Zuständen wechselt.

Dabei wird vorteilhaft die Frequenz des Sweepsignals von den ersten azimutalen und radialen Modi abgeleitet.

**Patentansprüche**

1. Hochdruckentladungslampe, die für den Resonanzbetrieb mit longitudinalen akustischen Resonanzen ausgelegt ist, mit einem längsgestreckten keramischen Entladungsgefäß (10), das eine Lampenachse A definiert und das ein Innenvolumen mit einer Innenlänge IL und einem maximalen Innendurchmesser ID aufweist, und das in einen Mittenbereich (11) mit konstantem Innendurchmesser ID und zwei Endbereiche (12) mit reduziertem Innendurchmesser gegliedert ist, wobei im Endbereich jeweils eine Elektrode (3) in das Entladungsgefäß ragt, wobei die Elektrode an einer Durchführung (4) befestigt ist, die in einer Kapillare (12) mit konstantem Innendurchmesser IDK am Ende des Entladungsgefäßes angeordnet ist, wobei das Entladungsgefäß (10) ein Aspektverhältnis von 2,5 bis 8, insbesondere 3 bis 6, aufweist, wobei sich im Endbereich (12) der Innendurchmesser auf höchstens 85 % von ID reduzierte bevorzugt auf höchstens 60 % von ID reduziert, so dass eine Stirnfläche (16) am Ende des Entladungsgefäßes einschließlich der Kapillare (12) verbleibt, die mindestens 15 % von ID, bevorzugt mindestens 20 % von ID, als Innendurchmesser IDE besitzt, **dadurch gekennzeichnet dass** in der Kapillare (12) innerhalb eines Abschnitts LSP, der eine axiale Länge vom Vierfachen des Innendurchmessers IDK der Kapillare aufweist und der an die Stirnfläche (16) am. Ende des Innenraums des Entladungsgefäßes angrenzt, zumindest der Beginn einer Engstelle zur Innenwand der Kapillare hin mit einer Spaltbreite zwischen der Durchführung (4;13-15;20.21; 25-28,30) und der Innenwand der Kapillare (12) von null bis höchstens 20 μm liegt.

2. Hochdruckentladungslampe nach Anspruch 1, **dadurch gekennzeichnet, dass** der Endbereich (12) sich zur Stirnfläche (16) hin so verjüngt, dass er aus einem konkavem und einem konvexen Abschnitt zusammengesetzt ist.

3. Hochdruckentladungslampe nach Anspruch 1, **dadurch gekennzeichnet, dass** der Übergang zwischen dem Endbereich (12) und der Stirnfläche (16) abgerundet ist.

4. Hochdruckentladungslampe nach Anspruch 1, **dadurch gekennzeichnet, dass** die Durchführung (4) aus mehreren Teilen besteht, wobei als ein Frontteil der Durchführung ein Mo/W-Kernstift und ein Mo/W-Gewickel verwendet wird, unter Einhaltung einer mittleren Spaltweite von ≤ 20 μm.

5. Hochdruckentladungslampe nach Anspruch 1, **dadurch gekennzeichnet, dass** die Durchführung (4) aus mehreren Teilen besteht, wobei als Frontteil der Durchführung ein massives metallisches zylindrisches Teil oder ein cermethaltiges zylindrisches Teil verwendet wird.

6. Hochdruckentladungslampe nach Anspruch 1, **dadurch gekennzeichnet, dass** der Eingangsbereich der Kappillare (12) spaltfrei gehalten wird, indem eine Presspassung oder Lötung der Elektrode verwendet wird.

7. Hochdruckentladungslampe nach Anspruch 1 bis 4, **dadurch gekennzeichnet, dass** das Entladungsgefäß (10) eine Füllung besitzt, die Metallhalogenide aufweist.

8. Betriebsverfahren zum Resonanzbetrieb einer Hochdruckentladungslampe nach einem der vorhergehenden Ansprüche, unter Benutzung einer hochfrequenten Trägerfrequenz, die insbesondere mittels Sweepsignal FM frequenzmoduliert ist, und die gleichzeitig amplitudenmoduliert wird, wobei zunächst eine Grundfrequenz $f_{2L}$ der Amplitudenmodulation AM eingestellt wird, wobei die Grundfrequenz der AM vom zweiten, longitudinalen Mode abgeleitet ist.

9. Betriebsverfahren nach Anspruch 8, **dadurch gekennzeichnet, dass** nach dem Zünden der Lampe und Abwarten einer Karenzzeit die Einstellung der Farbtemperatur bei vorgegebener Leistung dadurch erfolgt, dass die Amplitudenmodulation periodisch zwischen mindestens zwei Zuständen wechselt.

10. Betriebsverfahren nach Anspruch 8, **dadurch gekennzeichnet, dass** die Frequenz des Sweepsignals von den ersten azimutalen und radialen Modi abgeleitet wird.

11. Betriebsverfahren nach Anspruch 8, **dadurch gekennzeichnet, dass** ein AM-Grad zur Anregung der zweiten longitudinalen akustischen Resonanz von 10 bis 40 % verwendet wird, insbesondere 18 bis 25 %.

12. Betriebsverfahren nach Anspruch 8, **dadurch gekennzeichnet, dass** die anregende AM-Frequenz zwischen dem Wert $f_{2L}$ und dem Wert $f_{2L}$ - 1 kHz liegt.

13. Betriebsverfahren nach Anspruch 8, **dadurch gekennzeichnet, dass** sich die Amplitude eines festen AM-Grads stufenartig, abrupt, allmählich oder differenzierbar mit bestimmter Periodizität ändert.

14. System aus Hochdruckentladungslampe und einem EVG, mit einer Hochdruckentladungslampe nach einem der vorhergehenden Ansprüche 1 bis 7, wobei das EVG dazu ausgelegt ist, ein Betriebsverfahren nach Anspruch 8 bis 13 zu realisieren.

15. Hochdruckentladungslampe nach Anspruch 1. **dadurch gekennzeichnet, dass** das Verhältnis zwischen den Flächen, die von dem Innendurchmesser der Kapillare IDK und dem Durchmesser der Stirnfläche IDE gebildet werden, im Bereich von 0,06 bis 0,12 liegt.

**Claims**

1. High-pressure discharge lamp which is designed for resonant operation with longitudinal acoustic resonances, having an elongated ceramic discharge vessel (10), which defines a lamp axis A and which has an internal volume with an internal length IL and a maximum internal diameter ID, and which is subdivided into a center area (11) with a constant internal diameter ID and two end areas (12) with a reduced internal diameter, wherein an electrode (3) projects into the discharge vessel in each end area, wherein the electrode is attached to a bushing (4) which is arranged in a capillary (12) with a constant internal diameter IDK at the end of the discharge vessel, wherein the discharge vessel (10) has an aspect ratio of 2.5 to 8, in particular 3 to 6, wherein the internal diameter is reduced to at most 85% of ID, preferably reduced to at most 60%, of ID in the end area (12), such that an end surface (16) remains at the end of the discharge vessel including the capillary (12), which has an internal diameter ID of at least 15% of ID, preferably at least 20% of ID, **characterized in that** at least the start of a constriction towards the inner wall of the capillary, with a gap width between the bushing (4; 13-15; 20.21; 25-28, 30) and the inner wall of the capillary (12) from 0 to at most 20 $\mu$m is located in the capillary (12) within a section LSP, which has an axial length of four times the internal diameter IDK of the capillary, and is adjacent to the end surface (16) at the end of the internal area of the discharge vessel.

2. High-pressure discharge lamp according to Claim 1, **characterized in that** the end area (12) tapers toward the end surface (16) such that it comprises a concave section and a convex section.

3. High-pressure discharge lamp according to Claim 1, **characterized in that** the transition between the end area (12) and the end surface (16) is rounded.

4. High-pressure discharge lamp according to Claim 1, **characterized in that** the bushing (4) comprises a plurality of parts, wherein a Mo/W core pin and a Mo/W winding is used as a front part of the bushing, while maintaining a medium gap width of $\leq 20$ $\mu$m.

5. High-pressure discharge lamp according to Claim 1, **characterized in that** the bushing (4) comprises a plurality of parts, wherein a solid metallic cylindrical part or a cylindrical part containing cermet is used as the front part of the bushing.

6. High-pressure discharge lamp according to Claim 1, **characterized in that** the input area of the capillary (12) is held without a gap, **in that** an interference fit or soldering of the electrode is used.

7. High-pressure discharge lamp according to Claims 1 to 4, **characterized in that** the discharge vessel (10) has a filling which has metal halides.

8. Operating method for the resonant operation of a high-pressure discharge lamp according to one of the preceding claims, using a radiofrequency carrier frequency, which is frequency-modulated in particular by means of a sweep signal FM, and which is at the same time amplitude-modulated, wherein a fundamental frequency $f_{2L}$ is first of all set for the amplitude modulation AM wherein the fundamental frequency of the AM is derived from the second, longitudinal mode.

9. Operating method according to Claim 8, **characterized in that** after the igniting of the lamp and waiting for a waiting period, the color temperature is set at a predetermined power in that the amplitude modulation changes periodically between at least two states.

10. Operating method according to Claim 8, **characterized in that** the frequency of the sweep signal is derived from the first azimuthal and radial modes.

11. Operating method according to Claim 8, **characterized in that** an AM degree for excitation of the second longitudinal acoustic resonance of 10 to 40% is used, in particular 18 to 25%.

12. Operating method according to Claim 8, **characterized in that** the exciting AM frequency is between the value $f_{2L}$

and the value $f_{2L}$ - 1 kHz.

13. Operating method according to Claim 8, **characterized in that** the amplitude of a fixed AM degree changes in steplike fashion, abruptly, gradually or in a manner which can be differentiated with a specific periodicity.

14. System comprising a high-pressure discharge lamp and an electronic ballast having a high-pressure discharge lamp according to one of the preceding Claims 1 to 7, wherein the electronic ballast is designed to provide an operating method according to Claims 8 to 13.

15. High-pressure discharge lamp according to Claim 1, **characterized in that** the ratio between the areas which are formed by the internal diameter of the capillary IDK and the diameter of the end surface IDE is in the range from 0.06 to 0.12.

**Revendications**

1. Lampe à décharge haute pression qui est conçue pour le fonctionnement en mode résonant avec des résonances acoustiques longitudinales, comportant un tube de décharge (10) de forme allongée en céramique, qui définit un axe de lampe A et qui présente un volume intérieur d'une longueur intérieure IL et d'un diamètre intérieur maximal ID, et qui est divisé en une partie centrale (11) de diamètre intérieur constant ID et deux parties d'extrémité (12) de diamètre intérieur réduit, où dans chaque partie d'extrémité une électrode (3) s'avance dans le tube de décharge, ladite électrode étant fixée à un trou traversant (4) qui est disposé dans un tube capillaire (12) de diamètre intérieur constant IDK à l'extrémité du tube de décharge, ledit tube de décharge (10) ayant un rapport d'aspect allant de 2,5 à 8, en particulier de 3 à 6, où dans ladite partie d'extrémité (12) le diamètre intérieur se réduit à tout au plus 85 % de ID, de préférence à tout au plus 60 % de ID, de sorte qu'il subsiste une surface frontale (16) à l'extrémité du tube de décharge y compris le tube capillaire (12), qui possède un diamètre intérieur IDE égal à au moins 15 % de ID, de préférence à au moins 20 % de ID, **caractérisée en ce que** dans le tube capillaire (12), à l'intérieur d'une portion LSP qui présente une longueur axiale égale à quatre fois le diamètre intérieur IDK du tube capillaire et qui est contiguë à la surface frontale (16) à l'extrémité du volume intérieur du tube de décharge, se trouve au moins le début d'un étranglement vers la paroi intérieure du tube capillaire, avec un jeu entre le trou traversant (4 ; 13-15 ; 20, 21 ; 25-28, 30) et la paroi intérieure du tube capillaire (12) allant de zéro à tout au plus 20 $\mu$m.

2. Lampe à décharge haute pression selon la revendication 1, **caractérisée en ce que** la partie d'extrémité (12) s'amincit vers la surface frontale (16) de telle façon qu'elle est composée d'une portion concave et d'une portion convexe.

3. Lampe à décharge haute pression selon la revendication 1, **caractérisée en ce que** la transition entre la partie d'extrémité (12) et la surface frontale (16) est arrondie.

4. Lampe à décharge haute pression selon la revendication 1, **caractérisée en ce que** le trou traversant (4) est constitué de plusieurs parties, comme partie frontale du trou traversant étant utilisés une tige de noyau en Mo/W et un enroulement en Mo/W, en respectant un jeu moyen $\leq$ 20 $\mu$m.

5. Lampe à décharge haute pression selon la revendication 1, **caractérisée en ce que** le trou traversant (4) est constitué de plusieurs parties, comme partie frontale du trou traversant étant utilisé un élément cylindrique métallique massif ou un élément cylindrique contenant du cermet.

6. Lampe à décharge haute pression selon la revendication 1, **caractérisée en ce que** la zone d'entrée du tube capillaire (12) est maintenue sans jeu, en utilisant un ajustage serré ou un soudage de l'électrode.

7. Lampe à décharge haute pression selon la revendication 1 à 4, **caractérisée en ce que** le tube de décharge (10) contient un remplissage comprenant des halogénures métalliques.

8. Procédé de fonctionnement en mode résonant d'une lampe à décharge haute pression selon l'une des revendications précédentes, par utilisation d'une fréquence porteuse à haute fréquence, qui est modulée en fréquence notamment par un signal de balayage FM et qui est simultanément modulée en amplitude, dans lequel on règle d'abord une fréquence de base ($f_{2L}$) de la modulation d'amplitude AM, ladite fréquence de base de l'AM étant dérivée du second mode longitudinal.

**9.** Procédé de fonctionnement selon la revendication 8, **caractérisé en ce que**, après l'amorçage de la lampe et un délai d'attente, le réglage de la température de couleur, pour une puissance prédéfinie, s'effectue grâce au fait que la modulation d'amplitude varie périodiquement entre au moins deux états.

**10.** Procédé de fonctionnement selon la revendication 8, **caractérisé en ce que** la fréquence du signal de balayage est dérivée des premiers modes azimutaux et radiaux.

**11.** Procédé de fonctionnement selon la revendication 8, **caractérisé en ce que** l'on utilise un taux d'AM d'excitation de la deuxième résonance acoustique longitudinale de 10 à 40 %, en particulier de 18 à 25 %.

**12.** Procédé de fonctionnement selon la revendication 8, **caractérisé en ce que** la fréquence d'AM excitatrice est située entre la valeur $f_{2L}$ et la valeur $f_{2L}$ - 1 kHz.

**13.** Procédé de fonctionnement selon la revendication 8, **caractérisé en ce que** l'amplitude d'un taux d'AM fixe change par paliers, de manière abrupte, progressivement ou de manière différenciée avec une périodicité déterminée.

**14.** Système de lampe à décharge haute pression et d'un ballast électronique, comprenant une lampe à décharge haute pression selon l'une des revendications précédentes 1 à 7, le ballast électronique étant conçu pour réaliser un procédé de fonctionnement selon la revendication 8 à 13.

**15.** Lampe à décharge haute pression selon la revendication 1, **caractérisée en ce que** le rapport entre les surfaces formées par le diamètre intérieur du tube capillaire IDK et le diamètre de la surface frontale IDE est compris entre 0,06 et 0,12.

A

6

4

3

10

6

1

2

5

FIG 1

FIG 2

FIG 3

FIG 4

26

25

LSP

FIG 5

26

27

LSP

FIG 6

26

28

LSP

FIG 7

FIG 8

FIG 9

efficacy vs. acoustic content for segregation suppression

FIG 10

FIG 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6400100 B
- US 2003117075 A
- US 2003117085 A
- US 2005067975 A
- US 2004095076 A
- EP 1729324 A
- US 6184633 B